# EUROPEAN PATENT SPECIFICATION

(11) **EP 3 672 396 B1**
(45) Date of publication and mention of the grant of the patent: **26.05.2021**
(21) Application number: 17811730.5
(22) Date of filing: 25.08.2017
(51) Int. Cl.: A01G 17/06

(54) **IMPROVED ELASTIC COMPENSATION DEVICE FOR ROWS OF PLANTS AND METHOD OF USE THEREOF**
VERBESSERTE ELASTISCHE KOMPENSATIONSVORRICHTUNG FÜR REIHEN VON PFLANZEN UND VERFAHREN ZU DESSEN VERWENDUNG
DISPOSITIF DE COMPENSATION ÉLASTIQUE AMÉLIORÉ POUR RANGÉES DE PLANTES ET PROCÉDÉ D'UTILISATION DE CELUI-CI

(43) Date of publication of application: 01.07.2020
(73) Proprietor: Bortolussi, Franco, 33080 Fiume Veneto (PN) (IT); Bortolussi, Claudio, 33080 Fiume Veneto (PN) (IT)
(72) Inventor: Bortolussi, Franco, 33080 Fiume Veneto (PN) (IT); Bortolussi, Claudio, 33080 Fiume Veneto (PN) (IT)
(74) Representative: Giugni, Diego
(86) International application number: PCT/IT2017/000181
(87) International publication number: WO 2019/038792

(56) References cited:
- EP-A1- 2 324 700
- EP-A2- 1 699 286

## Description

### FIELD OF INVENTION

. The present invention refers to an elastic compensation device used in agriculture in rows of plants, preferably in orchards and principally in the viticultural field, in particular to compensate for the movement of the wires used in a row of plants for managing and training the growing foliage. The invention is also relative to a system for supporting rows of plants and a method for supporting plants in said rows.

### BACKGROUND OF THE INVENTION

. In agriculture, in particular in the viticultural field, it is a common practice to prearrange plant support structures consisting of rows of poles driven into the ground so as to form rows of plants. The poles are spaced apart and are interconnected in their parts above the ground by a horizontal wire, called "carrying wire", that is fastened to said poles at a suitable height from the surface of the ground. On the two poles located at the ends of each row, called "head poles", is also fastened at least one pair of wires parallel to each other and arranged on respective sides of each pole in the row. These wires are commonly called "holding wires" or "movable wires" because, during the various plant growing phases they are moved to different heights from the ground to contain and train the growing foliage according to a desired configuration. In the winter season, in fact, when the branches of the grapevine are very short or are completely absent, the pairs of movable wires are arranged in a position close to the ground. In spring and summer, when the plants develop an increasingly luxuriant growth, each pair of movable wires is raised to a position farther and farther from the ground in a direction orthogonal to the ground, restraining the foliage between the wires of each pair, thus controlling its growth according to a desired configuration. This operation is normally carried out to guarantee an ever greater exposure of the leaves and fruit to the sun and the wind.

. According to a first prior art solution, at least one of the ends of the movable wires is fastened to a head pole on the row by means of metal chains provided with a suitable coupling element or appropriate clamps, the latter are used to fasten one chain link to the pole. With this fastening solution, when it is necessary to displace each movable wire it is first necessary to loosen the wire by releasing the relative chain from the pole, then reposition the movable wire at the desired height, and finally couple the chain again to the pole. These operations, are all rather complex and laborious, and require the presence of at least two persons, one to support the chain while maintaining the movable wire taut and at least another person to shift the movable wire to a new position. It is thus evident, especially considering that in a field under cultivation there can be many rows of considerable length, and that said method of fastening the movable wires to a head pole on a row of plants involves a considerable amount of labor and relatively long operating times with considerable costs.

. A further prior art solution that overcomes the drawbacks of fastening by means of a chain is disclosed in European Patent EP1699286, in which an elastic compensation device consists substantially of an elastic element subjected to compression to which can be associated an element appropriate to produce the tautness of the movable wires to which the device is applied, and a pair of coupling elements provided respectively to fasten the device to a pole on a row and to support said tensioning element. This latter element consists of an oblong body that rotates about its own longitudinal axis, on which can be wound the movable wires.

. The device disclosed in EP1699286 calls for the whole device to be arranged between the head pole of a row and the region where the movable wires are coupled to the device. In other words, on a first end region of the device is provided a first means for fastening the device to a pole and in a second end region, opposite to the first end region, is provided a second fastening means on which one or more movable wires can be fastened to the same device. In this manner, any displacement of a movable wire involves a compression of the elastic element and a substantial increase of the distance between the first region for fastening the device to the pole and the second end region where the movable wires are fastened.

. Although the solution described in EP1699286 solves the above-mentioned problems, in some cases it can cause a problem connected with the increase of said distance that results in the interference of the device with the vegetation growing on the first plant located in a position adjacent to the head pole of the row. An additional problem consists of the reduced propensity of the device to accept wire tensioning devices that are different from a winding element. The slots provided on one of the two elements for coupling the device are hardly inclined to receive a tensioning element that does not have a shape that is substantially cylindrical, suitable to position itself crosswise with respect to the prevalent extension of the compensation device. The result of this is that the tensioning of the movable wires will be possible only with a relatively laborious work of winding the same wires on the tensioning element. A still further drawback is that the annular element for fastening the device to a pole is scarcely adaptable to poles having a cross section of a shape and/or size that are unlike those of the annular fastening element. As is known, the poles for plant rows may have cross sections with a large variety of shapes, and often, in the same row in which a damaged pole had to be replaced, there may be poles of different type and shape. This situation imposes frequent variations of the working arrangements of the machines used to produce annular elements of different shapes, increased storing positions and a costly management of the same.

. The device disclosed in patent EP2324700 represents an evolution of the device described in EP1699286 conceived to overcome the above-mentioned problems. This latter device comprises a first fastening element provided with fastening means suitable to fasten said device to an end pole on a row, a second fastening element suitable to receive at least a pair of said movable wires, and an elastic element comprising a first and a second end region, in which said means for fastening to a pole and said second element for fastening the movable wires to the device are arranged near the same end region of said elastic element so as to subject the elastic element only to compression. In particular, the second element for fastening the movable wires consists of a plate that carries two wire tensioning elements and is arranged between the means for fastening to the pole and the elastic element so that its flat surface is in contact with an end of the elastic element and can act against the same end to cause said compression. In this manner, the size of the device does not change with the changing of the position of the movable wires with respect to the ground, and thus the foliage of the plants contiguous to the head pole on the row is prevented form interacting with the compensation device. In addition, various types of wire tensioning elements, such as conventional winding rollers or choking cones, can be associated to the plate.

. Despite the above-mentioned advantages, the EP2324700 device has contraindications connected especially to its stability and sturdiness. In fact, the plate carrying the wire tensioning elements is in some ways movable, that it, it rotates with respect to an axis orthogonal to its contact surface with the spring. This rotation is desired because in this manner variations in the tractive force between the two wires fastened to it at the respective opposite ends can be compensated. This condition is however at the expense of the solidity of the plate which, due to its allowing said rotation and to its positioning with respect to the elastic element, can be subjected to bendings and distortions, or even breakages, if the wires become accidentally and/or suddenly very taut, for example when an agricultural piece of equipment accidentally entangles a wire. Therefore, both the positioning of the plate on the device and its capacity to tilt can be rather significant drawbacks.

### SUMMARY OF THE INVENTION

. The task of the present invention is thus to provide an elastic compensation device for wires, in particular for movable wires for supporting grapevine shoots or plant branches, that overcomes the shortcomings and disadvantage of the devices of known type like the ones previously described.

. In the scope of the above task, one purpose of the present invention is to provide an elastic compensation device for wires that can be easily and quickly installed on a pole of a row of plants, the same device being able to receive an economic tensioning means that is easy to use and can be rapidly installed on the compensation device.

. Another purpose of the present invention is to achieve an elastic compensation device for wires that can be mounted on any type of pole for rows of plants, regardless of the shape and size of the cross section of the pole.

. A further objective of the present invention is to provide an elastic compensation device for wires whose dimensions in its prevalent direction of extension remain unaltered in any condition of operation of the device.

. A still further objective of the present invention is to realize an elastic compensation device for wires, in particular for movable wires for supporting the shoots of grapevines or plant branches, that is capable of receiving different types of elements suitable to engender a state of traction in said wires.

. One not least important purpose is to achieve a sturdy and reliable device that can also withstand a high tension of the wires fastened to it.

. Other purposes to achieve are a system for supporting plants in rows and a method for supporting plants in rows comprising said device.

### BRIEF DESCRIPTION OF THE DRAWINGS

. The above tasks and objectives are achieved by an elastic compensation device according to one of claims 1-8. Characteristics and advantages of the invention will become evident from the description which follows, by way of example and without limitations, with reference to the enclosed drawings, wherein:
- figure 1 illustrates schematically the application of the elastic compensation device according to the invention in a row of plants;
- figure 2 illustrates a perspective view of an elastic compensation device for wires according to a first embodiment of the invention;
- figure 3 is an axonometric exploded view of the device of figure 2;
- figure 4 illustrates a detail of a second variant embodiment of the invention;
- figure 5 illustrates a longitudinal cross-sectional view of a first example of a tensioning element for the wires to apply to the device of the present invention;
- figure 6 illustrates an axonometric view of a second example of a tensioning element for the wires to apply to the device of the present invention;
- figure 7 illustrates an axonometric view of a third example of a tensioning element for the wires to apply to the device of the present invention.

### DETAILED DESCRIPTION OF THE INVENTION

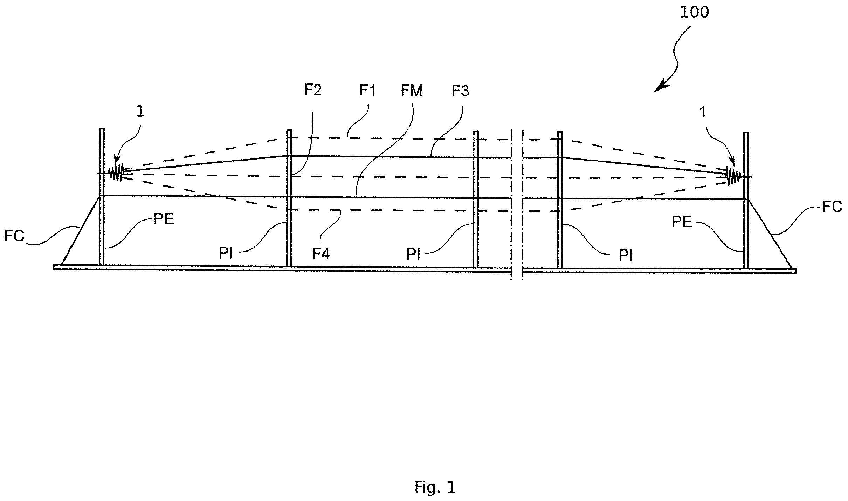

. In figure 1 can be seen the application of the elastic compensation device of the present invention to a plant support system in a row of plants. The system consists of a plurality of poles arranged in alignment and spaced apart from each other. The poles, as is well known, can be made of suitable wooden, cement or also metal elements having transversal cross sections of different shapes and often provided with elements and/or devices for coupling, even reversibly, wires on them. The poles situated at the ends of the row, called "head poles", are shown with the reference PE and the intermediate poles are indicated with PI. On all the poles PE and PI is fastened at a suitable height from the ground a fixed wire FM called "carrying wire"; moreover, the head poles are braced by suitable stay wires shown with the indication FC. On the two head poles PE are also provided elastic compensation devices 1 installed at a suitable distance from the ground; in the example shown in figure 1 the elastic compensation devices 1 are placed in a position higher than the fastening position of the carrying wire FM. To each elastic compensation device 1 is connected a pair of movable wires F that extend along both sides of the intermediate poles PI, that is on both the defined sides of the row. Thanks to the elasticity of the compensation devices 1, the movable wires F can be fastened with simple coupling operations to suitable coupling elements, of conventional type, formed or applied on the relative intermediate poles PI so as to be positioned at different heights above the ground. To indicate the different possible positions of the movable wires F, a numerical symbol was added to the common reference F; furthermore, only the position of the wire F3 has been shown with a solid line while the other ones, namely the positions of the two lower movable wires and the position of the wire above the wire F3, have been shown with broken lines, and respectively with the references F1, F2 and F4. The movable wires are also called holding wires for containing the growing vegetation because in the space defined by them the foliage is contained and supported during its growth.

. In the example of the application of an elastic compensation device 1 provided according to the present invention and illustrated in figure 1 is shown the application of two elastic compensation devices 1 to the respective two ends of the pair of movable wires F. It is however evident that, particularly in the case of rows of limited length, and in any case always based on the functional characteristics of the compensation devices 1, it may be possible to use only one device 1 by applying it to a single end of the pair of wires F.

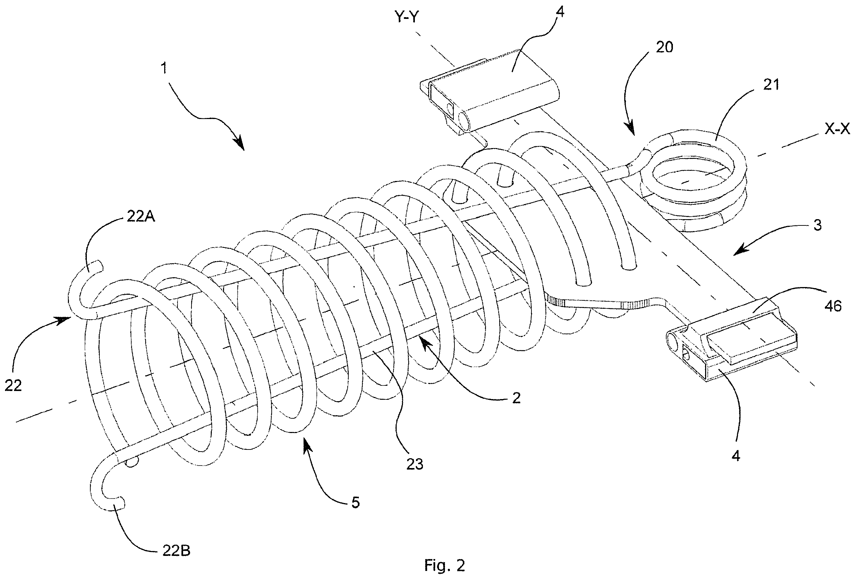

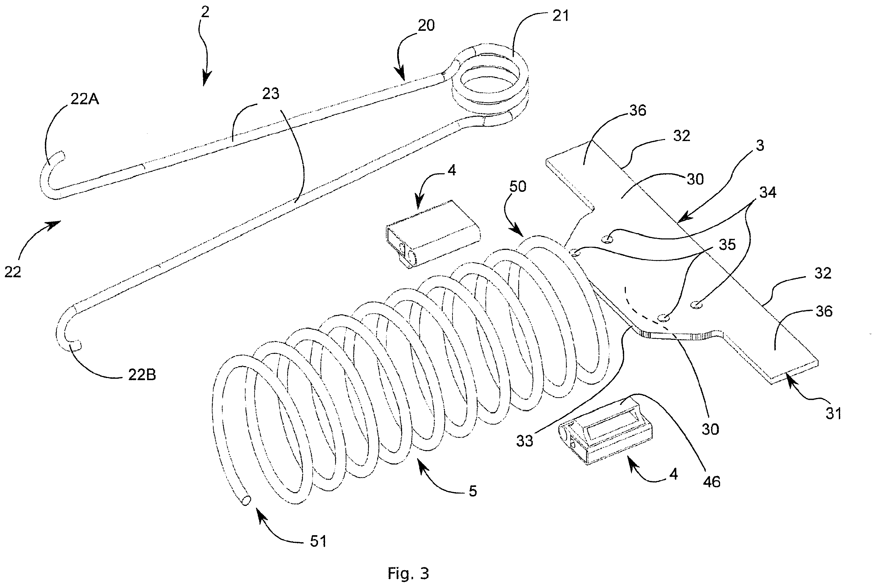

. With reference to figures 2 and 3, the following is a description of an elastic compensation device 1 for wires F provided according to the present invention. The device 1 comprises a first fastening element 2 suitable to fasten the device 1 to a head pole PE in a row, a second fastening element 3 suitable for fastening to the device 1 elements 4 designed for tensioning wires F and an elastic compensation element 5 for the wires F.

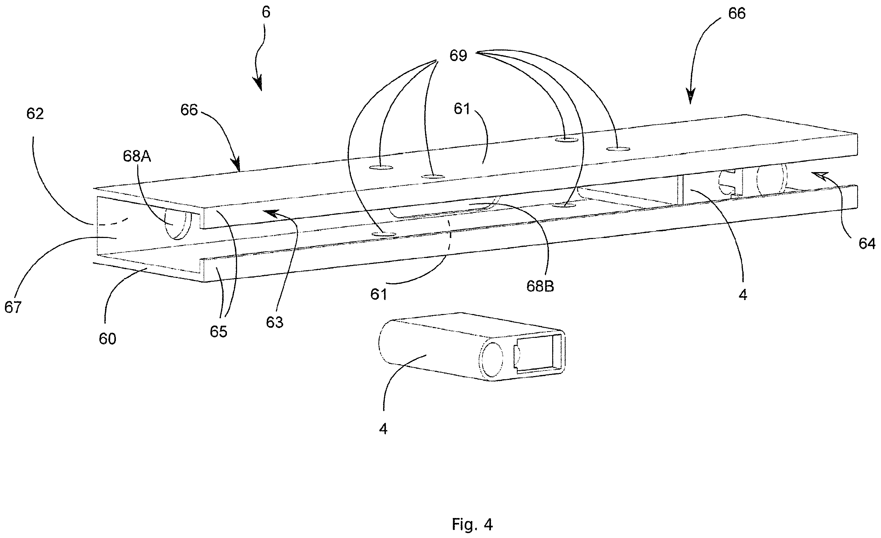

. The element 2 to be fastened to the head pole PE extends in a straight line along an axis X-X between a first end 20 provided with at least a slot 21 and a second end 22 opposite to the first end 20 and provided with two hooks 22A and 22B opposite to each other. Between said first and second ends extend in one continuous piece two filiform portions 23 that are substantially parallel to each other. In particular, the first fastening element 2 is formed by shaping a single piece of wire of suitable thickness, by bending in the middle the single piece of wire to create two extended portions 23. In this manner, the two ends of said piece of wire are each doubled up to form the two hooks 22A and 22B at the second end 22, while at the first end 20 is formed the at least one slot 21. Preferably, said at least one slot is formed by bending the first end to form one or more coils defining a single channel of engagement with a cable, a clamp or other means of connection to a pole PE suitable to engage said slot. Alternatively, the slot can be a single or double loop that is wound directly around an end pole PE, as shown in figures 3 and 4B of the above-mentioned patent EP2324700.

. The elastic element 5 is preferably made up of a helical compression spring that extends longitudinally from a first end 50 to a second end 51. Said spring is fitted over said first fastening element 2 so that its first end 50 is positioned near the first end 20 of said first fastening element 2, while the second end 51 is positioned at the second end 22 of said first element. In particular, it should be noted that at least the last coil of the second end 51 of the spring is caught by said two hooks 22A and 22B of the first fastening element. Thus, in this position, the spring practically surrounds the two extended portions 23 over their entire length.

. The second fastening element 3 consists of a plate that extends along an axis Y-Y substantially orthogonal to the axis X-X of the first element 2. This plate also has two opposed surfaces 30 separated by a perimetric edge 31. The perimetric edge 31 comprises at least a first side 32 opposite to a second side 33. It should be noted that advantageously the plate 3 is mounted on the device between the first end 20 of the first element 2 for fastening to the pole PE and the spring 5 so that its opposite surfaces 30 are parallel to a plane longitudinal to the axis X-X of the first element 2. In this position, the first side 32 of the edge 31 is turned toward the at least one slot 21 of the first fastening element 2, while the second side 33 of said edge is turned toward said two hooks 22A and 22B of said first element. In addition, the plate 3 is positioned crosswise with respect to the elongate portions 23 of said first element and in the space defined by said portions so as to allow its movement along them and therefore along the axis X-X.

. It should also be noted that advantageously the plate 3 comprises at least one pair of through holes 34, 35 between its two surfaces 30. Said holes are formed so as to allow the engagement of at least one coil of the first end 50 of the spring in order to allow the easy and rapid insertion by a twisting movement of the plate on the spring while maintaining the above orientation. With this operation, the plate will be solidly constrained, even if reversibly, on the spring during the travel movements of the same along the axis X-X, as will be explained below.

. The respective opposed ends 36 of the plate 3 are each one suitable to accommodate at least one tensioning element 4 for a wire F. In other words, each of the ends comprises at least one seat for accommodating or engaging said tensioning element 4. In accordance with the embodiment shown in figures 2 and 3, said ends 36 are shaped as projections suitable to fit into a retaining ring 46 of said tensioning elements 4, as will be explained below.

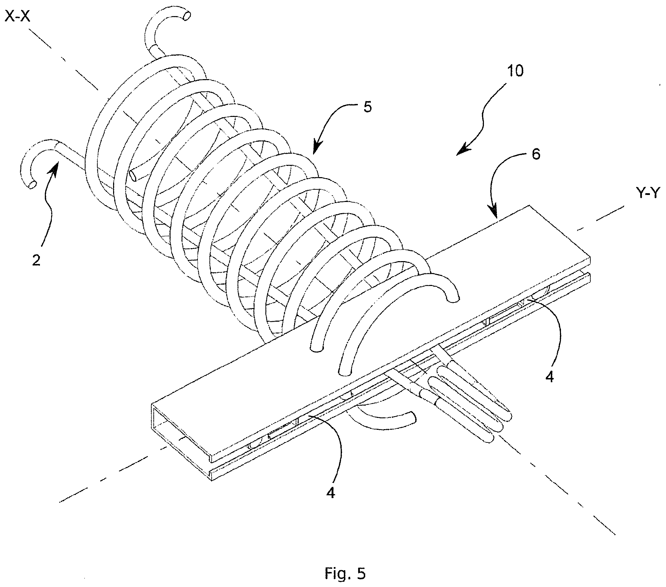

. According to a first variant embodiment of the invention, as shown in figures 4 and 5, the device 10 comprises a first element 2 for fastening to the pole PE that is substantially identical to the one previously described, as are the elastic element 5 and the tensioning elements 4. Therefore, these elements will not be described further here, and are shown with the same reference numbers.

. The second fastening element for the wires F is instead indicated with reference number 6 and is shown as a block or bar, preferably having a generally parallelepiped shape, that extends along a longitudinal axis Y-Y identical to the axis of the second element 3 described previously. Advantageously, the block 6 consists essentially of a thin plate 60 folded upon itself so as to define an internal cavity, two opposed larger external surfaces 61, a first smaller surface 62 substantially closed opposite a second smaller surface 63 provided with a longitudinal opening 64 delimited by the edges 65 of the plate that face each other after the above-mentioned folding. In this configuration, the block 6 displays two end portions 66, each provided with an opening 67 for inserting at least one element 4 for fastening the wires F. Preferably, the opening lies on the axis Y-Y, that is, it is orthogonal to the above-mentioned larger surfaces 61. In other words, the two end portions represent receiving seats for said at least one fastening element. In addition, at each of said two end portions 66 and on said first smaller surface 62 is formed at least one through hole 68A for engaging one wire F, while a slot 68B for engaging the above-mentioned elongate portions 23 of the first fastening element 2 is formed centrally with respect to said smaller surface. On the other hand, on each of said larger surfaces 61 are present at least one pair of through holes 69 for engaging at least one coil of the spring 5.

. In the above-mentioned configuration, the second fastening element 6 is arranged crosswise to the prevalent extension of the first fastening element 2, that is, along the axis X-X, and is also slidably mounted on the elongate portions 23 of said first fastening element through the engagement on one hand with the longitudinal opening 64 of the second smaller surface 63 and on the other hand with the slot 68B of the first smaller surface 62 of the block 6. The elongate portions 23, said opening 64 and said slot 68B form a guide means for the sliding of the second fastening element 6 with respect to the first fastening element 2.

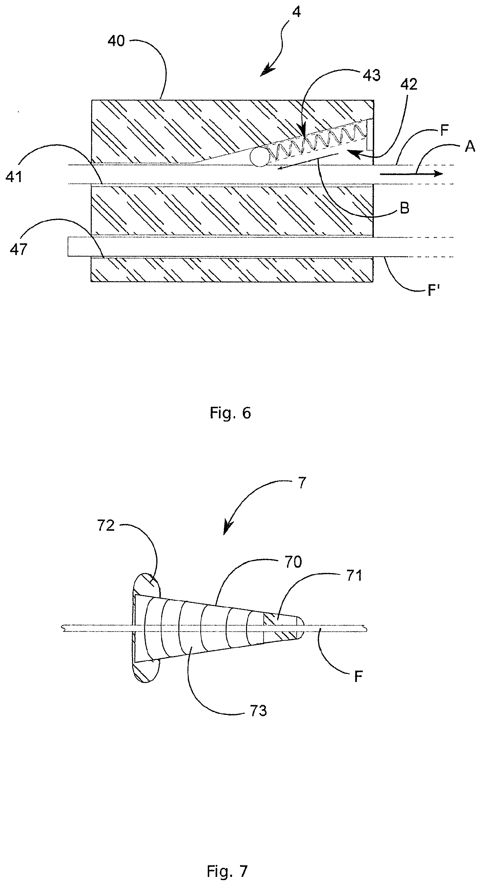

. In both the embodiments previously illustrated and described, the movable wires F are associated with the second fastening element 3, 6 through tensioning elements 4 suitable to cause a traction stress on each of the wires F. These elements, as is best shown in the cross section of figure 6, are known for example from patent application WO 2016/102907 and, therefore, will be only briefly described here. In particular, they are made up of a choking block provided with a solid body 40 having at least one internal channel 41 suitable to allow the sliding of a wire F in communication with a ramped cavity 42 suitable to house a device 43 that selectively locks the sliding of said wires F in the direction shown by the arrow B, while allowing the sliding in the direction of the arrow A. The locking device 43 is, for example, as shown in figure 6, made up of a spring 44 that acts on a spherical element 45 suitable to interact with the wire F. Alternatively, the spherical element can be substituted with a roll-cylinder device. Preferably, the body 40 can be provided with a ring 46 (figures 2 and 3) that is fitted onto the end 36 of the plate of the second fastening element 3 according to the first variant embodiment. Otherwise, according to the embodiment shown in figures 4 and 5, the ring 46 is not present because the element 4 is fitted, as explained, in a suitable holding seat. In addition, the body may include another channel 47, separate from said at least one internal channel 41, suitable to receive the terminal end F' of the wire F to avoid unwanted obstructions or the risk of scratches for the user or hazards for the farm equipment that operates along the plant rows.

. In figure 7 is shown a view in longitudinal cross section of an already known variant embodiment of said locking elements. The locking element 7 is preferably made of metal and is provided with a body 70 consisting of a hollow element having a tapered external surface, and a head 72 in the shape of a "hoop" that is fastened to the body 70 for example by welding and slightly projecting from it in a radial direction.

. The body 70 comprises at least one transversal section designed to engage a slot (not shown) specially formed on the second fastening element 3 or, alternatively, suitable to engage the through hole 68A of the first smaller surface 62 of the block 6. In this manner, the body 70 can be removably fastened to the first elements 3 and 6,

. Inside the tapered body 70, near the opening of the narrower end of the same, are found restraining means 71, for example wedge-shaped elements, that project from the internal edges of the body toward the center of the cavity and partially close it. Said restraining means are associated to an end of an opposing element 73 consisting of a spring operating by compression which, at the other end, abuts against the internal surface of the head. The particular internal shape of the locking element 7 allows the passage of a wire F in the direction that goes from the narrower end of the body 70, passing through the restraining means 71 and the coils of the spring 73, to the head end 72.

. The pressure exerted by the wire F inside the body 70 between the restraining means 71 causes the compression of the spring 73 associated to them and thus allows the insertion of the wire F inside the locking element 71.

. When the pressure exerted by the force of insertion of the wire F into the locking element 71 ceases, that is, when the desired degree of tension of the wire F is reached, the opposing spring 73 pushes the restraining means 71 toward their idle position, thereby causing them to become wedged between the internal surface of the body 70 and the wire F thus preventing the extraction of the wire. In other words, the locking element 31 is internally configured to enable the passage within it of a wire F only in one direction, while preventing through suitable restraining means the possibility for the wire F being extracted in the opposite direction, in a manner in every way similar to what happens with the above-mentioned fastening element 4.

. In agreement with the present invention, and referring to an elastic compensation device 1 installed in a row of plants as shown in figure 1, when the wires F are displaced in a vertical direction with respect to the ground, that is, when they are moved from the position F2 parallel to the ground to one of the positions F1, F3, F4, the wires F connected to the second fastening element 3 or 6 exert a traction on the latter. This traction stress causes a displacement of the second fastening element 3, 6 from the first end 20 of the first fastening element 2 toward the second end 22 of the same, sliding along the elongate portions 23 of the first fastening element 2. The elastic element 5, which is constrained between the second fastening element 3, 6 and the hooks 22A and 22B of the first fastening element 2, will be subjected to only a compression stress due to the traction stress exerted by the wires F on the second fastening element.

. As can be easily recognized, thanks to the configuration of the elastic compensation device 1 as described above, the dimensions of said device 1 in the direction of extension of the row of plants remain constant in every condition of operation of the device 1, that is, for any position of the wires F. In particular, the dimensions of the elastic compensation device 1 will be the same as the length of the first fastening element 2 comprised between its two ends 20, 22.

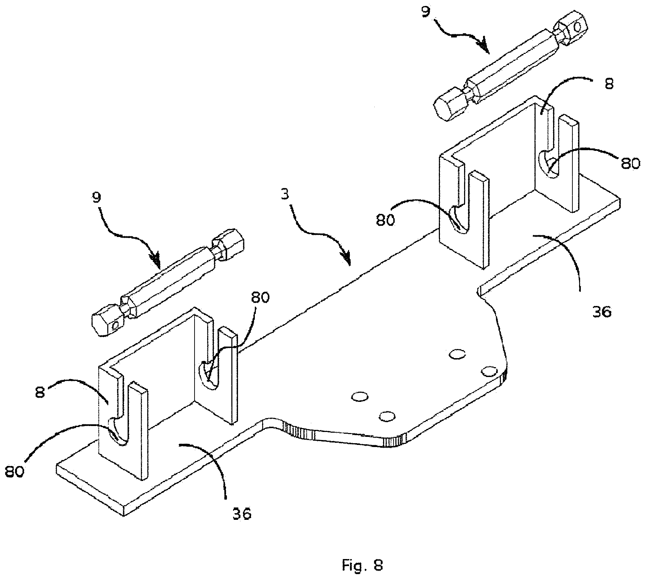

. In figure 8 is illustrated a further variant embodiment of the fastening elements for the wire F. In this variant embodiment, the plate 3 is provided, in addition, with a plurality of supports 8, at the ends 36, each comprising a seat 80 within which are rotatably housed conventional wire tensioning rollers 9. The supports 8 can be formed advantageously by making cuts in the plate 3 and bending the portions of material delimited by the cut lines and lifting them from the plane containing the plate. Alternatively, said supports can be welded on one of the two opposite surfaces 30 of the plate 3.

. In the case of using the block 6 according to the variant embodiment of the wire fastening element, the rolls 9 can be housed in its cavity by providing supports 8 similar to the ones previously described formed in said cavity.

. Referring now to a row of plants fitted with a couple of elastic compensation devices 1 achieved according to the invention, as illustrated in figure 1, in order to favor the adjustment of the position of the compensation device 1 when the movable wires F are displaced, in particular when each wire F is moved in a direction orthogonal to the ground which results in a rotation of the same wire F around the head pole PE, the other wire F also undergoes an equal and opposite rotation because both of them are constrained at the ends 36, 66 of the fastening elements 3, 6 of said device 1. In this manner, the first fastening element 3, 6 actuates on one hand a sort of compensation of the rotations and, on the other hand, thanks also to the simultaneous engagement with at least one coil of the spring 5, it guarantees a precision and sturdiness of the device that is subjected to traction from the wires F when they are moved orthogonally to the ground, as already explained.

. A further objective of the invention is a system according to claim 9 for supporting rows of plants, particularly fruit plants and preferably grapevines, comprising the elastic compensation device 1 according to any one of claims 1-8.

. In particular, the system comprises a row supporting system, a plurality of intermediate poles PI for guiding and supporting a plurality of wires F that hold and support the foliage. The support system for supporting the row comprises at least one end pole PE or head pole fastened into the ground with conventional means such as for example cement bases. The end pole is also generally braced by means of bracing wires FC fixed to the ground by means of conventional anchors. Alternatively, or in combination, to the head pole can preferably be connected a pole planted vertically by means of a first structural element (not shown) positioned at the upper ends of said head pole and of the corresponding vertical pole, and if necessary by means of a second structural element positioned at the lower ends of said poles driven into the ground so as to form a rigid structure capable of withstanding the traction of the wires on the row of plants, in accordance with the description of patent EP2988589. Fixed wires FM (or carrying wires FF as defined in said patent and distinct from the holding wires, indicated as FM) are fixed to the two end poles PE at a predetermined and unvaried height in order to support the fruiting branch of a plant. These wires are also maintained at such a height above the ground along the whole row thanks to the use of conventional hooks (not shown) formed on each intermediate pole PI. These hooks are also distributed along the pole so as to guarantee different positions of the movable wires, as is normally done, so as to follow and contain the growing foliage. Movable wires F3 are connected at least at one end to the elastic compensation devices 1 according to the present invention, which devices 1 are in turn fastened to the end poles PE.

. One still further objective of the invention is a method according to claim 10 for supporting plants along rows, comprising the steps of:
- driving into the ground at a predetermined distance two end poles PE braced with suitable means;
- arranging in a straight line between the two end poles PE a plurality of intermediate poles PI comprising hooks for reversibly connecting wires F for supporting the plants;
- fastening to said two end poles at least one fixed wire FM for supporting a fruiting branch of said plants and a plurality of movable wires F1-F4 on two sides of said end poles so as to cover the entire length of the row side by side and delimiting a space of containment for the branches of the growing plants,
in which said step of fastening the plurality of movable wires F1-F4 is achieved by means of elastic compensation devices 1 according to any one of claims 1-8.

. It was thereby ascertained that the device of the invention had achieved the preestablished task and purposes. In fact, advantageously, the device is simple and rapid to install on a pole of a row of plants, said pole being such as to have a cross section of any shape and dimensions. The device according to the invention also allows the installation of a large variety of tensioning means available on the market at low cost, that are easy to use and rapidly installed on the compensation device.

. A further advantage lies in the fact that its dimensions do not change with the varying position of the movable wires with respect to the ground, therefore the growing plants adjacent to the head pole are saved from any interaction with the compensation device.

. Another advantage stems from the fact that the plate or block used to make the second fastening element for the movable wires F is considerably sturdier than, for example, the plate used in accordance with the solution described in patent EP2324700. In fact, on one hand the plate and the block of the invention push against the spring with one side of small extent but of considerable thickness represented by the extension of their larger surfaces, which are arranged, as explained and shown earlier, on the axis of the device, and on the other hand they are firmly engaged with said spring, thanks to the holes on the plate and on the block.

. The solution with the block is particularly advantageous, since the tensioning elements for the wires F are protected within it, and thus they are safe from any impacts that could neutralize its correct operation, or they avoid encumbrances and projections of the device with the risk of harming the foliage or the personnel and the farming equipment at work in the vineyard.

. The embodiments of an elastic compensation device according to the present invention are not limited to those shown in the enclosed drawings but may also consist of many variant embodiments, all of them falling within the scope of the enclosed claims. Moreover, the materials, as well as the dimensions of the individual components of the invention can be the most suitable for the specific requirements.

## Claims

1. Elastic compensation device (1;10) for movable wires (F) containing the growing foliage of plants, comprising a first fastening element (2) provided with a first end (20) for fastening said device to a head pole (PE) of a row of plants and a second end (22) opposite to the first end along a rectilinear axis (X-X) and provided with two hooks (22A and 22B) opposite to each other, a second fastening element (3;6) suitable to fasten to the device tensioning elements (4;7;9) for said movable wires (F) and a helical elastic compensation element (5) for the wires (F) fitted over said fastening element (2), wherein said second fastening element (3;6) is arranged between said elastic element (5) and said first end (20) of said first element (2) for fastening to the pole, **characterized in that** said second fastening element (3;6) comprises two opposite larger surfaces (30,30;61,61) lying on a plane containing said axis (X-X) and provided with through holes (34,35;69) for engaging at least one coil of said elastic element (5).

2. Device (1;10) according to claim 1, wherein said second fastening element (3) for the movable wires (F) is a plate extending along an axis (Y-Y) substantially orthogonal to the axis (X-X) of the first element (2) and is such as to slide along said axis of the first element.

3. Device (1) according to claim 2, wherein said plate (3) comprises two respective opposed ends (36), each suitable to receive at least one tensioning element (4;7;9).

4. Device (10) according to claim 1, wherein said second fastening element (6) for the movable wires (F) is a block that extends along a longitudinal axis (Y-Y) orthogonal to the axis (X-X) of said first fastening element (2), and consists of a thin plate (60) folded upon itself so as to define an internal cavity, two end portions (66), each of which is suitable to accommodate at least one tensioning element (4;7;9) for the movable wires (F), two larger external surfaces (61) opposite to each other, one first smaller surface (62) opposite to a second smaller surface (63).

5. Device (10) according to claim 4, wherein said first smaller surface (62) comprises at least one through hole (68A) at each of the end portions (66) of the block and a slot (68B) formed in central position, said second smaller surface (63) comprising instead a longitudinal opening (64) delimited by the edges (65) of the plate that face each other.

6. Device (1;10) according to any one of claims from 1 to 5, wherein said first element (2) for fastening to the end pole (PE) comprises two elongate portions (23) that extend in one continuous rectilinear piece between said first end (20) containing a slot (21) engaged with said end pole (PE) directly or through a connecting means, and said hooks (22A, 22B), said elongate portions (23) being girdled by said elastic element (5).

7. Device (1;10) according to any one of claims from 1 to 6, wherein said wire tensioning element is chosen from among a choking block (4), a choking cone (7), and wire winding and locking rollers (9) for the movable wires (F).

8. Device (1;10) according to claim 7, wherein the plate (3) or the block (6) of the second fastening element for the movable wires (F) comprises support elements (8) for rotatably supporting said roll (9) for winding and locking the movable wires (F).

9. System (100) for supporting rows of plants, comprising at least one end pole (PE) driven into the ground, a plurality of intermediate poles (PI) for guiding and supporting a plurality of wires (F) carrying the foliage of the plants and at least one elastic compensation device (1;10) according to any one of the claims from 1 to 8.

10. Method for supporting plants arranged in rows, comprising the steps of:
- driving into the ground at a predetermined distance two end poles (PE) braced with suitable means;
- arranging in a straight line between said two end poles (PE) a plurality of intermediate poles (PI) comprising hooks for reversibly connecting support wires (F) for the plants;
- fastening to said two head poles at least one fixed wire (FM) for supporting a fruiting branch of said plants and a plurality of movable wires (F1-F4) on two sides of said head poles so as to run along the entire length of the row parallel to each other and delimiting a space of containment for the branches of the growing plants,
in which said step of fastening the plurality of movable wires (F1-F4) is achieved by means of elastic compensation devices (1;10) according to any one of claims 1 to 8.

## Patentansprüche

1. Elastische Ausgleichsvorrichtung (1;10) für bewegliche Drähte (F), die das wachsende Laub von Pflanzen einhegen, umfassend ein erstes Befestigungselement (2), das mit einem ersten Ende (20), um die Vorrichtung an einer Kopfstange (PE) an einer Reihe von Pflanzen zu befestigen, und einem zweiten Ende (22) gegenüber dem ersten Ende entlang einer geradlinigen Achse (XX) versehen ist, das mit zwei einander gegenüberliegenden Haken (22A und 22B) ausgestattet ist, ein zweites Befestigungselement (3; 6), das dazu geeignet ist, an den Vorrichtungsspannelementen (4; 7; 9) für die beweglichen Drähte (F) befestigt zu werden, und ein spiralförmiges elastisches Ausgleichselement (5) für die Drähte (F), die über dem Befestigungselement (2) angebracht sind, wobei das zweite Befestigungselement (3; 6) zwischen dem elastischen Element (5) und dem ersten Ende (20) des ersten Elements (2) zur Befestigung an der Stange angeordnet ist, **dadurch gekennzeichnet, dass** das zweite Befestigungselement (3; 6) zwei gegenüberliegende größere Flächen (30, 30; 61, 61) aufweist, die auf einer Ebene liegen, die die Achse (X-X) umfasst und mit Durchgangslöchern (34, 35; 69) zum Eingreifen mit wenigstens einer Windung des elastischen Elementes (5) versehen ist.

2. Vorrichtung (1; 10) nach Anspruch 1, bei der das zweite Befestigungselement (3) für die beweglichen Drähte (F) eine Platte ist, die sich entlang einer Achse (Y-Y) erstreckt, die im wesentlichen orthogonal zu der Achse (X-X) des ersten Elementes (2) und so beschaffen ist, dass es entlang der Achse des ersten Elements gleitet.

3. Vorrichtung (1) nach Anspruch 2, bei der die Platte (3) zwei jeweils gegenüberliegende Enden (36) umfasst, die jeweils dazu geeignet sind, wenigstens ein Spannelement (4; 7; 9) aufzunehmen.

4. Vorrichtung (10) nach Anspruch 1, bei der das zweite Befestigungselement (6) für die beweglichen Drähte (F) ein Block ist, der sich entlang einer Längsachse (Y-Y) senkrecht zu der Achse (X-X) des ersten Befestigungselementes (2) erstreckt und aus einer dünnen Platte (60), die auf sich selbst gefaltet ist, um einen inneren Hohlraum zu definieren, zwei Endabschnitten (66), von denen jeder geeignet ist, wenigstens ein Spannelement (4; 7; 9) für die beweglichen Drähte (F) aufzunehmen, zwei größeren Außenflächen (61), die einander gegenüberliegen, und einer ersten kleineren Fläche (62), die einer zweiten kleineren Fläche (63) gegenüberliegt, besteht.

5. Vorrichtung (10) nach Anspruch 4, bei der die erste kleinere Oberfläche (62) wenigstens ein Durchgangsloch (68A) an jedem der Endabschnitte (66) des Blocks und einen Schlitz (68B) umfasst, der in zentraler Position ausgebildet ist, wobei die zweite kleinere Fläche (63) stattdessen eine Längsöffnung (64) umfasst, die durch die einander zugewandten Ränder (65) der Platte begrenzt ist.

6. Vorrichtung (1; 10) nach einem der Ansprüche 1 bis 5, bei der das erste Element (2) zur Befestigung an der Endstange (PE) zwei längliche Abschnitte (23) umfasst, die sich in einem durchgehenden geradlinigen Stück zwischen dem ersten Ende (20), das einen Schlitz (21) umfasst, der direkt oder über ein Verbindungsmittel mit der Endstange (PE) in Eingriff steht, und den Haken (22A, 228) erstrecken, wobei die länglichen Abschnitte (23) von dem elastischen Element (5) umgeben sind.

7. Vorrichtung (1; 10) nach einem der Ansprüche 1 bis 6, bei der das Drahtspannelement aus einem Abschnürblock (4), einem Abschnürkegel (7) und Drahtwickel- und Verriegelungsrollen (9) für die beweglichen Drähte (F) ausgewählt ist.

8. Vorrichtung (1; 10) nach Anspruch 7, bei der die Platte (3) oder der Block (6) des zweiten Befestigungselements für die beweglichen Drähte (F) Stützelemente (8) zum drehbaren Lagern der Rolle (9) umfasst, um die beweglichen Drähte (F) aufzuwickeln und zu blockieren.

9. System (100) zum Halten von Pflanzenreihen, umfassend wenigstens eine in den Boden eingetriebene Endstange (PE), mehrere Zwischenstangen (PI) zum Führen und Halten mehrerer Drähte (F), die das Laub der Pflanzen tragen, und wenigstens eine elastische Ausgleichsvorrichtung (1; 10) nach einem der Ansprüche 1 bis 8.

10. Verfahren zum Halten von in Reihen angeordneten Pflanzen, umfassend folgende Schritte:
- Treiben zweier mit geeigneten Mitteln versteifte Endstangen (PE) in einem vorgegebenen Abstand in den Boden;
- Anordnen einer Vielzahl von Zwischenstangen (PI), die Haken zum reversiblen Anschließen von Haltedrähten (F) für die Pflanzen umfassen, in einer geraden Linie zwischen den beiden Endstangen (PE);
- Befestigen an den beiden Kopfstangen wenigstens eines festen Drahtes (FM) zum Halten eines Fruchtzweigs der Pflanzen und mehrerer beweglicher Drähte (F1-F4) an zwei Seiten der Kopfstangen, so dass sie über die gesamte Länge der Reihe parallel zueinander verlaufen und einen Einhegebereich für die Zweige der wachsenden Pflanzen begrenzen, wobei der Schritt des Befestigens der zahlreichen beweglichen Drähte (F1-F4) mittels elastischer Ausgleichsvorrichtungen (1; 10) gemäß einem der Ansprüche 1 bis 8 erreicht wird.

## Revendications

1. Dispositif de compensation élastique (1 ; 10) pour des fils mobiles (F) contenant le feuillage en croissance de plantes, comprenant un premier élément de fixation (2) muni d'une première extrémité (20) pour fixer ledit dispositif à un poteau de tête (PE) d'une rangée de plantes et d'une seconde extrémité (22) opposée à la première extrémité le long d'un axe rectiligne (X-X) et munie de deux crochets (22A et 22B) opposés l'un à l'autre, un second élément de fixation (3 ; 6) approprié pour fixer au dispositif des éléments de tension (4 ; 7 ; 9) pour lesdits fils mobiles (F) et un élément de compensation élastique hélicoïdal (5) pour les fils (F) ajustés sur ledit élément de fixation (2), dans lequel ledit second élément de fixation (3 ; 6) est disposé entre ledit élément élastique (5) et ladite première extrémité (20) dudit premier élément (2) pour la fixation au poteau, **caractérisé en ce que** ledit second élément de fixation (3 ; 6) comprend deux grandes surfaces opposées (30, 30 ; 61, 61) se trouvant sur un plan contenant ledit axe (X-X) et pourvues de trous traversants (34, 35 ; 69) pour engager au moins une bobine dudit élément élastique (5).

2. Dispositif (1 ; 10) selon la revendication 1 , dans lequel ledit second élément de fixation (3) pour les fils mobiles (F) est une plaque s'étendant le long d'un axe (Y-Y) sensiblement orthogonal à l'axe (X-X) du premier élément (2) et est tel qu'il peut glisser le long dudit axe du premier élément.

3. Dispositif (1) selon la revendication 2, dans lequel ladite plaque (3) comprend deux extrémités opposées respectives (36), chacune étant adaptée pour recevoir au moins un élément de tension (4 ; 7 ; 9).

4. Dispositif (10) selon la revendication 1, dans lequel ledit second élément de fixation (6) pour les fils mobiles (F) est un bloc qui s'étend le long d'un axe longitudinal (Y-Y) orthogonal à l'axe (X-X) dudit premier élément de fixation (2), et consiste en une plaque mince (60) repliée sur elle-même de manière à définir une cavité interne, deux parties d'extrémité (66), dont chacune est adaptée pour recevoir au moins un élément de tension (4 ; 7 ; 9) pour les fils mobiles (F), deux grandes surfaces externes (61) opposées l'une à l'autre, une première surface plus petite (62) opposée à une seconde surface plus petite (63).

5. Dispositif (10) selon la revendication 4, dans lequel ladite première surface plus petite (62) comprend au moins un trou traversant (68A) à chacune des parties d'extrémité (66) du bloc et une fente (68B) formée en position centrale, ladite seconde surface plus petite (63) comprenant à la place une ouverture longitudinale (64) délimitée par les bords (65) de la plaque qui se font face.

6. Dispositif (1 ; 10) selon l'une quelconque des revendications 1 à 5, dans lequel ledit premier élément (2) de fixation au poteau d'extrémité (PE) comprend deux parties allongées (23) qui s'étendent en une seule pièce rectiligne continue entre ladite première extrémité (20) contenant une fente (21) engagée avec ledit poteau d'extrémité (PE) directement ou par l'intermédiaire d'un moyen de connexion, et lesdits crochets (22A, 22B), lesdites parties allongées (23) étant ceinturées par ledit élément élastique (5).

7. Dispositif (1 ; 10) selon l'une quelconque des revendications 1 à 6, dans lequel ledit élément de tension de fils est choisi parmi un bloc d'étranglement (4), un cône d'étranglement (7), et des galets d'enroulement et de blocage de fils (9) pour les fils mobiles (F).

8. Dispositif (1 ; 10) selon la revendication 7, dans lequel la plaque (3) ou le bloc (6) du second élément de fixation pour les fils mobiles (F) comprend des éléments de support (8) pour supporter en rotation ledit galet (9) pour enrouler et bloquer les fils mobiles (F).

9. Système (100) de support de rangées de plantes, comprenant au moins un poteau d'extrémité (PE) enfoncé dans le sol, une pluralité de poteaux intermédiaires (PI) pour guider et supporter une pluralité de fils (F) portant le feuillage des plantes et au moins un dispositif de compensation élastique (1 ; 10) selon l'une quelconque des revendications de 1 à 8.

10. Procédé de support de plantes disposées en rangées, comprenant les étapes suivantes :
- enfoncer dans le sol à une distance prédéterminée deux poteaux d'extrémité (PE) contreventés par des moyens appropriés ;
- disposer en ligne droite entre lesdits deux poteaux d'extrémité (PE) une pluralité de poteaux intermédiaires (PI) comprenant des crochets pour connecter de manière réversible des fils de support (F) pour les plantes ;
- fixer auxdits deux poteaux de tête au moins un fil fixe (FM) pour supporter une branche fructifère desdites plantes et une pluralité de fils mobiles (F1-F4) sur deux côtés desdits poteaux de tête de manière à courir sur toute la longueur de la rangée parallèlement les uns aux autres et à délimiter un espace de confinement pour les branches des plantes en croissance,
dans lequel ladite étape de fixation de la pluralité de fils mobiles (F1-F4) est réalisée au moyen de dispositifs de compensation élastique (1 ; 10) selon l'une quelconque des revendications 1 à 8.
